Europäisches Patentamt

European Patent Office

Office européen des brevets

(11) Veröffentlichungsnummer: **0 052 205**
**A1**

(12) # EUROPÄISCHE PATENTANMELDUNG

(21) Anmeldenummer: **81107726.2**

(22) Anmeldetag: **29.09.81**

(51) Int. Cl.³: **F 16 K 5/02**

(30) Priorität: **13.11.80 DE 3042756**

(43) Veröffentlichungstag der Anmeldung:
**26.05.82 Patentblatt 82/21**

(84) Benannte Vertragsstaaten:
**CH FR GB LI**

(71) Anmelder: **AZ Armaturen GmbH & Co. KG**

**D-7745 Schonach(DE)**

(72) Erfinder: **Wisser, Gerhard**
**Hauptstrasse 3a**
**D-7745 Schonach(DE)**

(74) Vertreter: **Patentanwälte Dipl.-Ing. W. Scherrmann**
**Dr.-Ing. R. Rüger**
**Webergasse 3 Postfach 348**
**D-7300 Esslingen (Neckar)(DE)**

(54) **Hahn, insbesondere für aggressive Medien.**

(57) Bei einem Hahn, insbesondere für aggressive Medien, sind das Gehäuse (1) und das Küken (4) an den dem Medium zugewandten Flächen mit einem spritzfähigen, korrosionsbeständigen, thermoplastischen, vorzugsweise zur Gruppe der Fluorkohlenwasserstoffe gehörigen Kunststoff, z.B. Fluräthylenpropylen oder Polyfluoräthylen, ausgekleidet.

Um zu erreichen, daß die Reibungsbeiwerte zwischen Küken (4) und Gehäuse (1) auch bei der Einwirkung von aggressiven Medien so niedrig bleiben, daß bei einwandfreier Abdichtung eine leichte Verdrehung des Kükens (4) möglich ist, ist eine in den Zwischenraum zwischen dem Gehäuse (1) und dem Küken (4) des Hahnes eingebrachte Laufbüchse (12) aus Polytetrafluoräthylen mit der Kunststoffauskleidung (10 bzw. 11) des Gehäuses (1) oder des Kükens (4) fest verbunden.

./...

Fig. 1

Patentanwälte Dipl.-Ing. W. Scherrmann Dr.-Ing. R. Rüger
7300 Esslingen (Neckar) Webergasse 3 Postfach 348

28. September 1981
PA 3 EU naeh

Telefon
Stuttgart (0711) 35 65 39
3ᶜ 96 19
Telex 07 256613 sm.ru
Telegramme Patentschutz
Esslingenneckar

- 1 -

AZ Armaturen GmbH & Co. KG., D-7745 Schonach

Hahn, insbesondere für aggressive Medien

Die Erfindung betrifft einen Hahn, insbesondere für aggressive Medien, dessen Gehäuse und dessen Küken an den dem Medium zugewandten Flächen mit einem spritzfähigen, korrosionsbeständigen, thermoplastischen, vorzugsweise zur Gruppe der Fluorkohlenwasserstoffe gehörigen Kunststoff, z.B. Fluoräthylenpropylen oder Polyfluoräthylen, ausgekleidet sind.

Die bekannten Hähne der obengenannten Art, deren Auskleidungswerkstoffe wegen ihrer ausgezeichneten Korrosionsbeständigkeit die Hähne besonders für aggressive Medien verwendbar machen und die wegen ihrer Spritzfähigkeit bei der Auskleidung der Hähne besonders gut verarbeitbar sind, haben den Nachteil, daß die verwendeten Auskleidungswerkstoffe zu hohen Reibungsbeiwerten führen, insbesondere wenn der Hahn eine Zeit lang für ein aggressives Medium verwendet worden ist, von dem gewisse Bestandteile in die Oberfläche der Auskleidung einfundieren und diese zum Quellen bringen. Dann läßt sich das Küken insbesondere bei Hähnen mit großen Nennweiten nur noch sehr schwer drehen.

Aufgabe der Erfindung ist es, einen Hahn der eingangs genannten Art derart zu verbessern, daß die Reibungsbeiwerte zwischen Küken und Gehäuse auch bei der Einwirkung von aggressiven Medien so niedrig bleiben, daß bei einwandfreier Abdichtung eine leichte Verdrehung des Kükens möglich ist.

Zur Lösung dieser Aufgabe ist eine in den Zwischenraum zwischen Gehäuse und Küken eingebrachte Laufbüchse aus Polytetrafluoräthylen mit der Kunststoffauskleidung des Gehäuses oder des Kükens fest verbunden. Obwohl Polyfluoräthylen ebenfalls zu den Kunststoffen auf der Grundlage von Fluorkohlenwasserstoff gehört, zeigt sich hierbei überraschenderweise, daß zwischen der Laufbüchse aus diesem Werkstoff und dem die Auskleidung des Gehäuses bzw. des Kükens bildenden spritzfähigen korrosionsbeständigen thermoplastischen Kunststoff, der zur Gruppe der Fluorkohlenwasserstoffe gehört und z.B. aus Fluoräthylenpropylen oder Polyfluoräthylen besteht, keine erhöhten Reibungsbeiwerte auftreten. Polytetrafluoräthylen schmilzt bei der Verarbeitungstemperatur nicht, sondern liegt hierbei als halbfestes Material vor, so daß es nicht spritzfähig ist. Aus diesem Grunde ist es zur Auskleidung des Gehäuses oder des Kükens eines Hahnes weniger geeignet. Es ist daher zweckmäßig, bezüglich der Auskleidung bei den spritzfähigen korrosionsbeständigen Thermoplasten zu verbleiben. Andererseits bereitet es keine Schwierigkeiten, eine Laufbüchse aus Polytetrafluoräthylen zu formen und diese mit der Auskleidung aus spritzfähigem thermoplastischem Kunststoff unlösbar zu verbinden. Hierzu kann die Laufbuchse durch Pressen in das Gehäuse eingebracht bzw. auf das Küken aufgebracht sein oder die Laufbuchse kann auch mit dem Gehäuse oder mit dem Küken formschlüssig verbunden sein, indem die Laufbuchse z.B. an ihrem Umfang Bohrungen aufweist, in die der Auskleidungswerkstoff des Gehäuses bzw. der Buchse eingreifen.

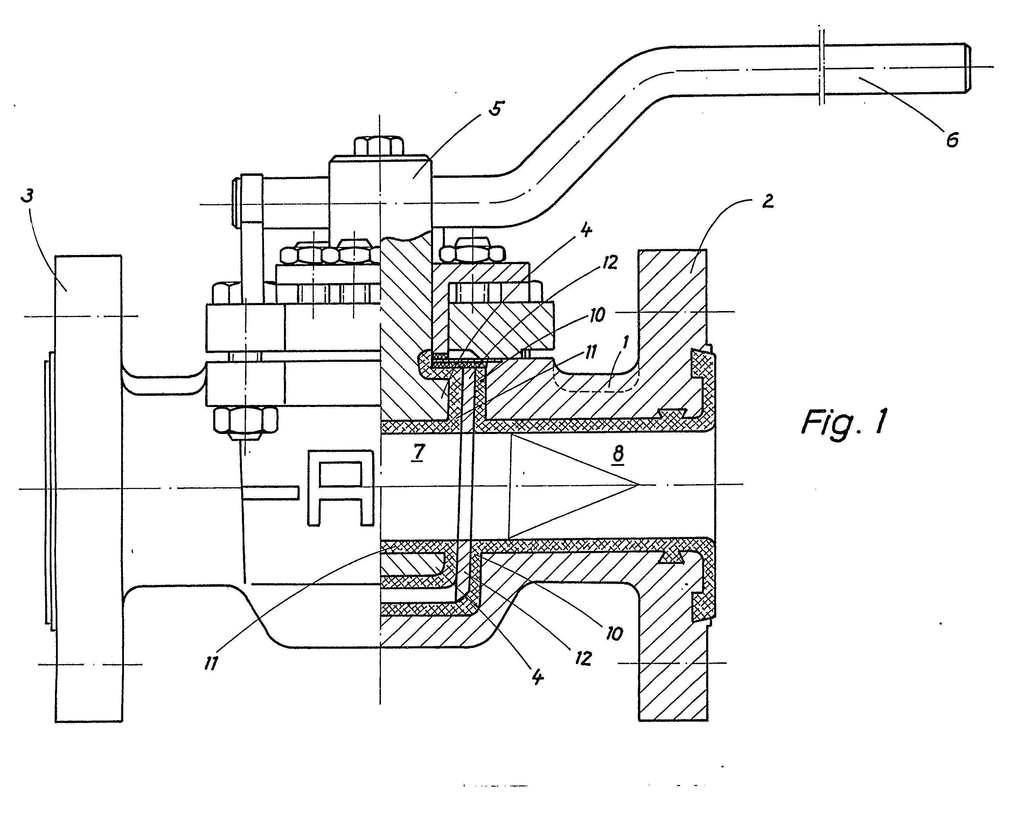

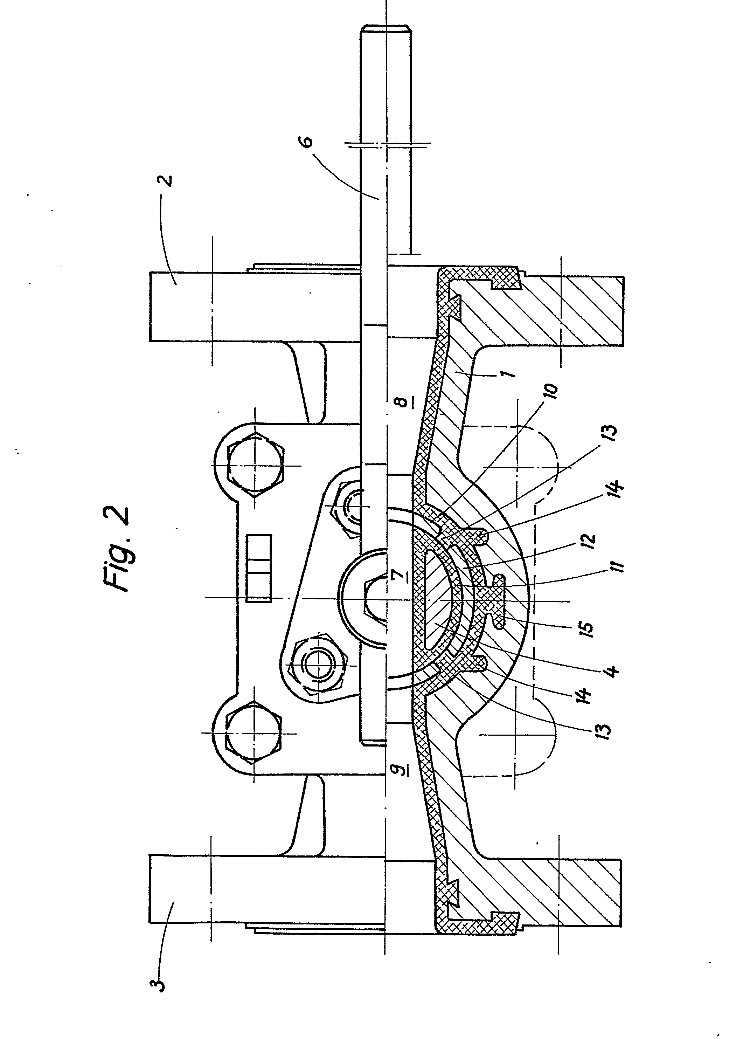

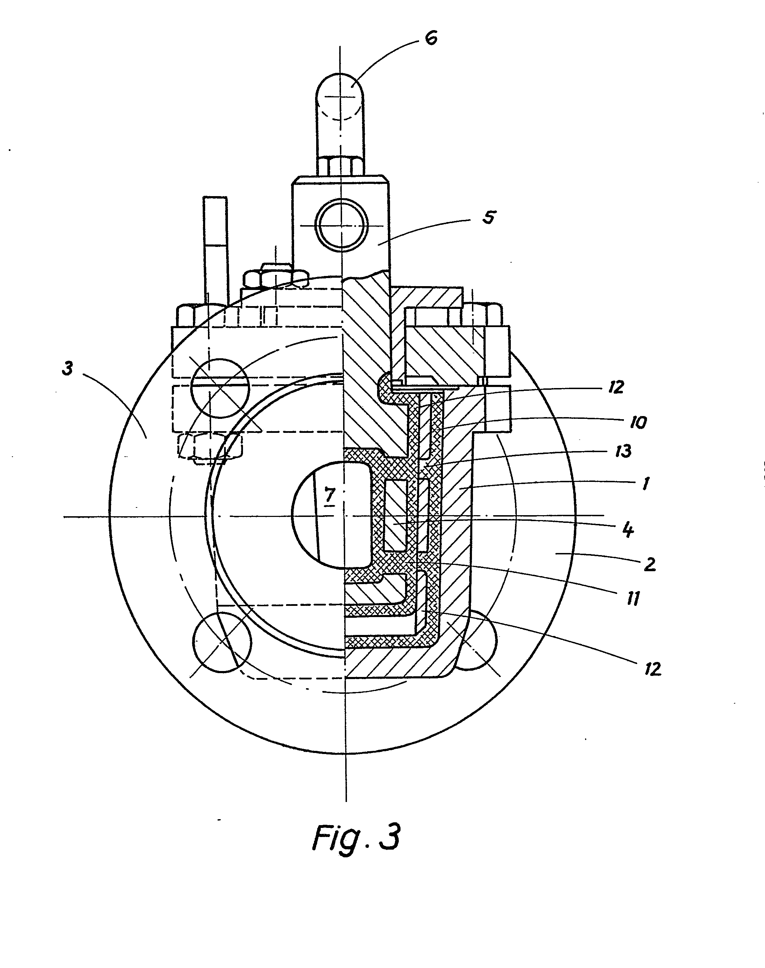

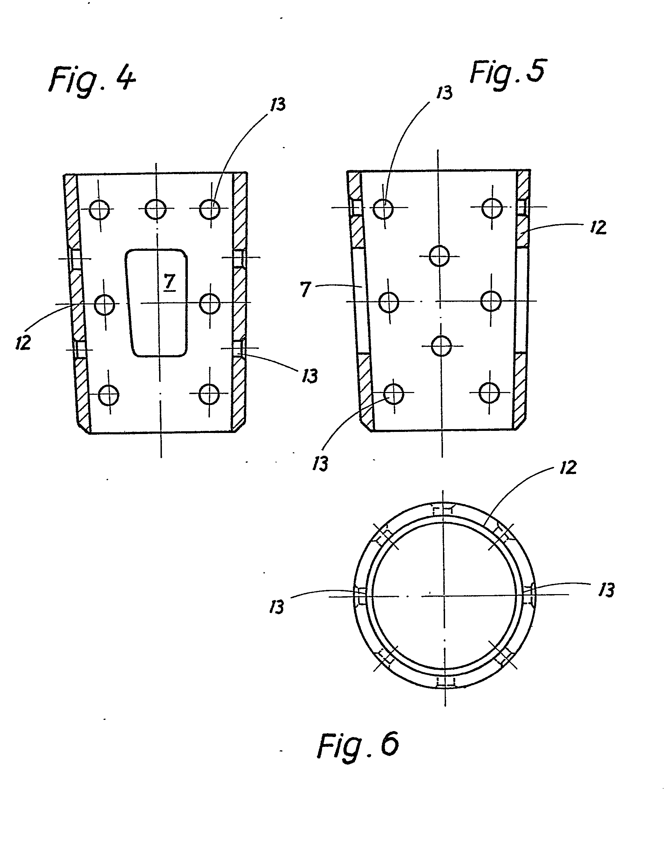

In der Zeichnung ist ein Ausführungsbeispiel des Gegenstandes der Erfindung dargestellt. Es zeigen
Figur 1 einen Hahn gemäß der Erfindung, teilweise in einer Seitenansicht und teilweise in einem senkrechten axialen Schnitt, Figur 2 den Hahn in einer Draufsicht und teilweise in einem waagerechten axialen Schnitt, Figur 3 den Hahn teilweise in einer Vorderansicht und teilweise in einem Schnitt, der rechtwinklig zur Achse des Hahnes und in der Ebene der Achse des Kükens verläuft, Figur 4 eine in der Auskleidung des Gehäuses des Hahnes zu befestigende Laufbuchse in einem senkrechten axialen Schnitt, Figur 5 die Laufbuchse ebenfalls in einem um 90$^{\circ}$ versetzten senkrechten axialen Schnitt und Figur 6 die Laufbuchse in einer Draufsicht.

Das einstückige Gehäuse 1 des Hahnes für aggressive Medien weist wie üblich an seinen beiden seitlichen Enden Flansche 2 und 3 auf. In der Mitte des Gehäuses 1 ist um eine rechtwinklig zur Strömungsrichtung des abzuschließenden Mediums verlaufende Achse verdrehbar ein kegelstumpfförmiges Küken 4 gelagert. Es geht nach außen in einen Schaft 5 über, an dem ein Schwenkhebel 6 befestigt ist.

In Fig. 1 bis 3 ist der Hahn in seiner Offenstellung gezeichnet, in welcher der Durchgang 7 des Kükens und die Durchgänge 8 und 9 des Gehäuses 1 miteinander fluchten. Durch Verschwenken des Schwenkhebels 6 um 90$^{\circ}$ kann das Küken 4 entsprechend verdreht und in seine Schließstellung verbracht werden, in der es die Durchgänge 8 und 9 des Gehäuses 1 verschließt, wobei sein Durchgang 7 rechtwinklig zu diesen verläuft.

Alle inneren Flächen des Gehäuses 1, insbesondere auch diejenigen im Bereich des Kükens 7, sind mit einer Auskleidung 10 aus dem einen thermoplastischen Fluorkohlenwasserstoff darstellenden Kunststoff Fluoräthylenpropylen bedeckt. Auch das Küken 4 selbst trägt an seinen Innen- und Außenflächen eine entsprechende zusammenhängende Auskleidung 11 aus dem gleichen Werkstoff.

In den Zwischenraum zwischen dem Gehäuse 1 und dem Küken 4 bzw. denjenigen zwischen den beiderseitigen Auskleidungen 10 und 11 ist eine Laufbüchse 12 aus Polytetrafluoräthylen eingebracht, die mit der Kunststoffauskleidung 10 des Gehäuses 1 fest verbunden ist. Hierzu weist die Laufbüchse an ihrem Umfang Bohrungen 13 auf, in die der Werkstoff der Auskleidung 10 eingreift, was dadurch erreicht wird, daß beim Anformen der Auskleidung 10 durch Spritzgießen die vorgeformte Laufbuchse 12 bereits in das Gehäuse eingesetzt ist und der flüssige Auskleidungswerkstoff sodann auch in ihre Bohrungen 13 hineinfließt. Hierdurch ergibt sich eine besonders feste Verankerung der Laufbüchse 12 an der Innenwand des Gehäuses 1, gegen die sie anliegt. An dieser Innenwand sind insbesondere im Bereich der Bohrungen 13 der Laufbuchse 12 Nuten 14 und 15 vorgesehen, durch welche die Auskleidung 10 in dem Bereich, in dem sie über die Laufbüchse 12 auf Verdrehung beansprucht wird, zusätzlich verankert ist.

Die Auskleidung 10 des Gehäuses 1 kann statt aus Fluoräthylenpropylen auch aus Polyfluoräthylen oder einem anderen spritzfähigen korrosionsbeständigen thermoplastischen Kunststoff, der vorzugsweise zur Gruppe der Fluorkohlenwasserstoffe gehört, bestehen. Das gleiche gilt für die Auskleidung 11 des Kükens 4.

Ebenso ist die Anwendung der Erfindung offensichtlich unabhängig von der Gestalt des Hahnkükens. Statt bei einem Hahn mit einem kegelstumpfförmigen Küken, wie bei dem vorstehend beschriebenen Ausführungsbeispiel, kann das Küken naturgemäß auch zylindrisch oder kugelförmig gestaltet sein.

Patentansprüche:

1. Hahn, insbesondere für aggressive Medien, dessen Gehäuse und dessen Küken an den dem Medium zugewandten Flächen mit einem spritzfähigen, korrosionsbeständigen, thermoplastischen, vorzugsweise zur Gruppe der Fluorkohlenwasserstoffe gehörigen Kunststoff, z.B. Fluoräthylenpropylen oder Polyfluoräthylen, ausgekleidet sind, dadurch gekennzeichnet, daß eine in den Zwischenraum zwischen dem Gehäuse (1) und dem Küken (4) des Hahnes eingebrachte Laufbüchse (12) aus Polytetrafluoräthylen mit der Kunststoffauskleidung (10 bzw. 11) des Gehäuses (1) oder des Kükens (4) fest verbunden ist.

2. Hahn nach Anspruch 1, dadurch gekennzeichnet, daß die Laufbüchse (12) mit dem Gehäuse (1) oder dem Küken (4) formschlüssig verbunden ist.

3. Hahn nach Anspruch 2, dadurch gekennzeichnet, daß die Laufbüchse (12) an ihrem Umfang Bohrungen (13) aufweist, in die der Werkstoff der Auskleidung (10 bzw. 11) des Gehäuses (1) bzw. des Kükens (4) eingreift.

4. Hahn nach Anspruch 3, dadurch gekennzeichnet, daß die die Laufbüchse (12) tragende Auskleidung (10 bzw. 11) des Gehäuses (1) bzw. des Kükens (4) insbesondere im Bereich der Bohrungen (13) der Laufbüchse (12) in Verankerungsnuten (14, 15) in der Wand des Gehäuses (1) bzw. des Kükens (4) eingreift.

*Fig. 1*

0052205

0052205

Fig. 2

Fig. 3

Fig. 4

Fig. 5

Fig. 6

Europäisches
Patentamt

**EUROPÄISCHER RECHERCHENBERICHT**

0052205

Nummer der Anmeldung

EP 81107726.2

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | F 16 K 5/02 |
| | DE - A - 2 145 196 (XOMOX CORP.)<br>* Gesamt *<br>-- | 1,4 | |
| | AT - B - 297 430 (THE DURIRON COMPANY)<br>* Gesamt *<br>-- | 1-4 | |
| | GB - A - 905 717 (AUDCO LIMITED)<br>* Gesamt *<br>-- | 1-4 | **RECHERCHIERTE SACHGEBIETE (Int. Cl.³)** |
| | US - A - 2 961 214 (J.B. FREED)<br>* Gesamt *<br>---- | 1 | F 16 K 5/00<br>F 16 K 25/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
liegende Theorien oder
Grundsätze
E: kollidierende Anmeldung
D: in der Anmeldung angeführtes
Dokument
L: aus andern Gründen
angeführtes Dokument
&: Mitglied der gleichen Patentfamilie, übereinstimmendes
Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 16-02-1982 | ROUSSARIAN |

EPA form 1503.1   06.78